# EUROPÄISCHE PATENTANMELDUNG

(11) **EP 4 382 576 A1**
(43) Veröffentlichungstag der Anmeldung: **12.06.2024**
(21) Anmeldenummer: 22211326.8
(22) Anmeldetag: 05.12.2022
(51) Int. Cl.: C09D 7/61, C09D 7/63, C09D 7/65, C09D 15/00

(54) **ZUSAMMENSETZUNG ZUR VERSIEGELUNG UND BESCHICHTUNG VON KANTEN UND/ODER FASEN VON HOLZWERKSTOFFPLATTEN**

(71) Anmelder: Flooring Technologies Ltd., Kalkara SCM1001 (MT)
(72) Erfinder: Hasch, Joachim, 10317 Berlin (DE); Kalwa, Norbert, 32805 Horn-Bad Meinberg (DE); Gier, Andreas, 66399 Mandelbachtal (DE)
(74) Vertreter: Maikowski & Ninnemann Patentanwälte Partnerschaft mbB

(57) **Zusammenfassung**

Die vorliegende Erfindung betrifft eine Zusammensetzung zur Versiegelung und Beschichtung von Kanten und/oder Fasen von Holzwerkstoffplatten umfassend a) mindestens eine Fasenfarbe, und b) mindestens ein Additiv aus mindestens einer Verbindung der allgemeinen Formel (I) **R¹ₐSiX¹₍₄₋ₐ₎,** wobei X¹ Alkoxy-, Aryloxy-, Acyloxy- ist, und R¹ ein organischer Rest ist ausgewählt aus der Gruppe umfassend Alkyl, Aryl, Cycloalkyl, die durch -O- oder -NHunterbrochen sein können, und wobei R¹ mindestens eine funktionelle Gruppe Q₁ aufweist, die ausgewählt ist aus einer Gruppe enthaltend eine Acryl-, Acryloxy-, Methacryl-, Methacryloxy-, Cyano-, Isocyano- und Epoxid- Gruppe, und a = 0, 1, 2, 3, insbesondere 0 oder 1 ist, mindestens einer Verbindung der allgemeinen Formel (II) **R²_{b}SiX²_{(4-b)}**, wobei X² H oder Alkoxy-, Aryloxy-, Acyloxy ist, R² ein nicht-hydrolysierbarer organischer Rest R² ist ausgewählt aus der Gruppe umfassend Alkyl und Aryl, und b = 1, 2, 3, oder 4 ist, und mindestens einer wässrigen Polymerdispersion, gekennzeichnet durch eine Viskosität (gemessen gemäß EN ISO 2431:2011, 21 °C) mit einer Auslaufzeit zwischen 20 und 100 sec, bevorzugt zwischen 30 und 80 sec, insbesondere bevorzugt zwischen 35 und 60 sec über einen Zeitraum von mindestens 30 Minuten, bevorzugt von mindestens 60 Minuten, insbesondere bevorzugt von mindestens 120 Minuten.

## Beschreibung

Die vorliegende Erfindung betrifft eine Zusammensetzung zur Beschichtung und Versiegelung von Kanten und/ oder Fasen von Holzwerkstoffplatten, die Verwendung dieser Zusammensetzung sowie Holzwerkstoffplatten mit dieser Zusammensetzung.

### Beschreibung

Fußbodenpaneele mit Feder-Nut-Profilen an den Seitenkanten zur Verlegung zu Paneelverbunden, wie Laminatfußböden, sind weit verbreitet und herkömmlich bekannt. Die Feder-Nut-Profile ermöglichen eine einfache Verlegung von Fußbodenpaneelen zu Fußbodenbelägen. Solche Fußbodenbeläge können zum Beispiel aus Holzfaserplatten oder Kunststoffplatten bestehen. Meistens sind die Fußbodenpaneele mit einer Dekorschicht und einer abriebfesten Oberflächenschicht versehen.

Als sehr populär haben sich Laminatböden mit so genannten V-Fugen erwiesen. Diese V-Fugen werden bei der Verlegung von Fußbodenpaneelen mit Fasen gebildet. Bei den Fasen handelt es sich um schräge Abfräsungen an den Seitenkanten der Fußbodenpaneele, die mit farbigen Lacken ablackiert werden und dem Laminatboden einem dem Parkett nachempfundenen visuellen Eindruck geben.

Es ist bekannt, dass das Produkt Laminatboden insbesondere nach der Umstellung von in Nut-und-Feder miteinander verleimten Elementen auf die leimlose Verlegung, in dem Übergang der Elemente eine Schwachzone bezüglich Feuchtigkeitsangriff bzw. Auftreten von Feuchtigkeitsschäden besitzt. Diese Schäden können durch direkte Feuchtigkeitseinwirkung, Überpflege usw. entstehen. Allerdings steht diesem Problem die sehr einfache und schnelle Verlegung dieses Bodenbelags mit den sogenannten Clickprofilen gegenüber. Man kann davon ausgehen, dass heute weit über 90% der Laminatböden mit einem Clickprofil hergestellt werden.

Zur Minderung von Feuchteschäden werden bisher verschiedene Strategien einzeln oder in Kombination angewendet. Die einfachste Möglichkeit, das Eindringen von Feuchtigkeit in das Profil zu erschweren, besteht darin, eine möglichst stramme Passung in der Nut- und Federverbindung zu verwenden. Dies kann allerdings zu einem erschwerten Zusammenfügen der Elemente oder dem Auftreten von Beschädigungen führen. Diese Methode hat zudem den Nachteil, dass, wenn Wasser in den Nut- und Federbereich eingedrungen ist, der Holzwerkstoffträger normal quillt.

Dieser Effekt kann gesteigert werden, in dem im Übergang der Elemente schon bei der Direktbeschichtung durch ein spezielles Pressblech eine Verdichtung erzeugt wird. Dies wird in der WO 2017/072657 A1 beschrieben. Allerdings wird damit die Quellung nur verzögert und nicht generell verhindert.

Eine weitere Möglichkeit ist die Versiegelung des Profils mit Hydrophobierungsmitteln. So wird in der WO 2006/038867 die Verwendung von Wachsen zur Beschichtung der Kanten beschrieben, wobei zumindest ein teilweises Eindringen des Wachses in das Holzwerkstoffmaterial zu beobachten ist. Aus der EP 903451 A2 ist die Verwendung von Diisocyanat-Diphenylmethan zur Behandlung der Kanten entnehmbar, das leicht in den Holzwerkstoff penetriert. In der WO 2008/078181 A1 wird wiederum ein fluoriertes Polymer, z.B. Perfluoroalkyl-Methacrylic-Copolymer als Beschichtungsmittel verwendet, wobei das schichtbildende Material bei Raumtemperatur fest ist.

Der Nachteil dieser bekannten Versiegelungsmittel besteht somit insbesondere darin, dass diese häufig bereits bei der Applikation in den Holzwerkstoffträger wandern und damit der Hydrophobierungseffekt minimiert wird. Dies kann aber auch nachträglich erfolgen, sodass der Effekt in der Nutzung langsam verloren geht.

Eine weitere Möglichkeit ist die Verwendung von quellvergüteten Holzwerkstoffplatten, bei denen in der Herstellung höherwertige Leime (melaminverstärkte UF-Leime, PMDI usw.) eingesetzt werden. Auch kann durch erhöhte Leimmengen eine Quellreduzierung erreicht werden. Diese Möglichkeiten sind allerdings unter Kostenaspekten die ungünstigsten, da erhöhte Leimmengen und/oder höherwertigere Leime zu einer deutlichen Verteuerung der Platten führen. Auch sind sie unter Recyclingaspekten als eher unvorteilhaft anzusehen.

Von den geschilderten Maßnahmen führt lediglich die Verwendung von höherwertigen Leimen zu einer Reduzierung der Quellung der Platten. Die übrigen verursachen lediglich eine Verzögerung des Eindringens des Wassers im Profilbereich.

Entsprechend ergeben sich aus den bekannten Maßnahmen verschiedene Nachteile. So ist die Verbesserung des Quellschutzes zu gering, die vorgeschlagenen Maßnahmen können teilweise reale Beanspruchungen nicht standhalten und die bewirkten Effekte sind zeitlich begrenzt.

Der vorliegenden Erfindung lag somit die Aufgabe zugrunde, die angeführten Nachteile zu überwinden. Insbesondere Iag der Erfindung die technische Aufgabe zu Grunde, einen Laminatboden zu produzieren, der durch eine Versiegelung des Fasenbereichs eine Dichtigkeit des Profils gegenüber aufliegendem Wasser erzeugt.

Dabei soll die bereits vorhandene Anlagentechnik verwendet werden können. Insbesondere soll dadurch der sogenannte NALFA-Test (24h-Wasserauflegetest, ISO 4760) bestanden werden. Dieser stellt darauf ab, das Eindringen von Wasser in das Profil durch geeignete Maßnahmen zu verhindern.

Diese Vorgehensweise hat den Vorteil, dass, als Trägermaterialien nicht Holzfaserplatten (MDF/HDF=Faserplatte/Faserplatte mit erhöhter Rohdichte) mit erhöhten Leimmengen oder mit qualitativ höherwertigen Leimsysteme, verwendet werden müssen, da im optimalen Fall kein Wasser in die Platte eindringt. Bei dem eingesetzten System sollten falls möglich keine Lösemittel benötigt werden. Auch sollten keine chemisch aggressiven oder die Umwelt stark belastenden Chemikalien zum Einsatz kommen. Reaktive Systeme (z. B.: Isocyanate), die durch Over-Spray mit der Produktoberfläche in Kontakt kommen können und mit ihr reagieren können, sollen ebenfalls nicht zur Anwendung kommen.

Diese Aufgabe wird erfindungsgemäß durch eine Zusammensetzung mit den Merkmalen des Anspruchs 1 gelöst.

Entsprechend wird eine Zusammensetzung zur Versiegelung und Beschichtung von Kanten und/oder Fasen von Holzwerkstoffplatten bereitgestellt, wobei die Zusammensetzung folgendes umfasst:
a) Mindestens eine Fasenfarbe, und
b) Mindestens ein Additiv aus
   - mindestens einer Verbindung der allgemeinen Formel (I)

      **R¹ₐSiX¹₍₄₋ₐ₎** **(I),**

      wobei
   - X¹ Alkoxy-, Aryloxy-, Acyloxy- ist, und
   - R¹ ein organischer Rest ist ausgewählt aus der Gruppe umfassend Alkyl, Aryl, Cycloalkyl, die durch -O- oder -NH- unterbrochen sein können, und
   - wobei R¹ mindestens eine funktionelle Gruppe Q₁ aufweist, die ausgewählt ist aus einer Gruppe enthaltend eine Acryl-, Acryloxy-, Methacryl-, Methacryloxy-, Cyano-, Isocyano- und Epoxid- Gruppe, und
   - a = 0, 1, 2, 3, insbesondere 0 oder 1 ist,
   - mindestens einer Verbindung der allgemeinen Formel (II)

      **R²_{b}SiX²_{(4-b)}** **(II),**

      wobei
   - X² H oder Alkoxy-, Aryloxy-, Acyloxy ist,
   - R² ein nicht-hydrolysierbarer organischer Rest R² ist ausgewählt aus der Gruppe umfassend Alkyl und Aryl, und
   - b = 1, 2, 3, oder 4 ist, und
   - mindestens einer wässrigen Polymerdispersion.

Die erfindungsgemäße Zusammensetzung weist eine Viskosität (gemessen gemäß EN ISO 2431:2011, Beschichtungsstoffe - Bestimmung der Auslaufzeit mit Auslaufbechern, 21°C) mit einer Auslaufzeit zwischen 20 und 100 sec, bevorzugt zwischen 30 und 80 sec, insbesondere bevorzugt zwischen 35 und 60 sec über einen Zeitraum von mindestens 30 Minuten, bevorzugt von mindestens 60 Minuten, insbesondere bevorzugt von mindestens 120 Minuten.

Die Viskosität kann in weiteren bevorzugten Ausführungsformen bis zu mindestens 24 h, 36 h oder 72 h die angeführten Auslaufzeiten aufweisen. Ein wesentlicher Vorteil der vorliegenden Zusammensetzung ist, dass diese über einen längeren Zeitraum (mindestens bis zu 72 h) stabil ist und nicht geliert. Dies ermöglicht eine verlässliche Reproduzierbarkeit und Einsetzbarkeit der erfindungsgemäßen Zusammensetzung.

Es erfolgt eine kombinierte Verwendung einer Fasenfarbe mit einem Versiegelungsmittel nach der Profilierung der Fußbodenpaneele. Dieses Gemisch bzw. Zusammensetzung wird in dem bereits vorhandenen Auftragsaggregat (Auftragsrad oder Vakkumat) auf die Plattenkanten und/oder angefräste Fase aufgetragen. Nach Trocknung versiegelt dieses Gemisch den Profil- und den Fasenbereich wirkungsvoll gegen das Eindringen von Wasser. Dabei ist von besonderem Vorteil, dass ein kombinierter Auftrag erfolgt und damit die Installation eines zusätzlichen Auftragsaggregats und einer zusätzlichen Trocknung vermieden wird. Dabei kann die Mischung der Komponenten erst unmittelbar vor dem Auftrag auf die Kante und/oder Fase erfolgen. Dadurch kann auch eine einfache Veränderung der Komponenten in der laufenden Produktion vorgenommen werden. Dies gilt natürlich auch für Farbwechsel.

Das in der vorliegenden Zusammensetzung verwendete Additiv umfasst mit der Verbindung der allgemeinen Formel (I) eine vernetzende Komponente und mit der Verbindung der allgemeinen Formel (II) eine hydrophobe Komponente. Die vernetzende, hydrophile Komponente der Formel (I) ermöglicht zum einen, insbesondere über die (vorhandenen oder sich mittels Hydrolyse von z.B. Alkoxy-Gruppen bildenden) freien -OH Gruppen, eine Anbindung der Verbindung an die Holzfasern und zum anderen die Ausbildung eines Netzwerkes. Die hydrophobe Komponente der Formel (II) - gebildet z.B. aus den Alkylgruppen des Restes R² - bildet eine wasserabweisende Barriere auf. Auf diese Weise kann das Wasser nicht durch das Netzwerk der ausgebildeten Beschichtung diffundieren.

Das in der vorliegenden Zusammensetzung verwendete Additiv ermöglicht ein Auffüllen der in der Holzfaserplatte vorhandenen Poren und ein Umhüllen der Holzfasern, wodurch diese "versiegelt" werden. Andererseits wird durch die Verwendung hydrophober Modifikationen eine "Hydrophobierung" der noch verbleibenden Poren und der noch unbeschichteten Holzfasern aufgebaut.

Um eine möglichst hohe Flexibilität der Beschichtung zu erhalten werden die Silanverbindungen mit einer geeigneten, wässrigen Polymerdispersion vermischt. Die verwendeten Polymere haben funktionelle Gruppen, die mit der anorganischen Silan-Matrix kompatibel sind. Daher gelingt es auch bei geringen Temperaturen, eine Beschichtung mit hohem Vernetzungsgrad herzustellen.

Die vorliegende Zusammensetzung ist für beliebige Plattensysteme und Leimsysteme einsetzbar. So bewirkt die Zusammensetzung eine Quellreduzierung bei Holzfaserplatten unabhängig von den verwendeten Leimsystemen, unterschiedlicher Porosität oder Plattenstärke. So konnte die quellreduzierende Wirkung der vorliegenden Zusammensetzung bei HDF-Platten und Spanplatten mit Harnstoff-Formaldehyd-Leim (UF-Leim), Melamin-Harnstoff-Formaldehyd-Leim (MUF-Leim) oder Polyurethan-basierten-Leim (PMDI-Leim) oder auch bei Platten aus Wood Plastic Composites (WPC) nachgewiesen werden.

Die erfindungsgemäße Zusammensetzung bietet verschiedene Vorteile. So wird eine deutlich niedrigere Quellung der Kanten bewirkt, die Zusammensetzung penetriert oder migriert nicht in die Platten, die Zusammensetzung kann bei beliebigen Platten- und Leimsystemen eingesetzt werden und es sind nur relativ geringe Auftragsmengen notwendig. Insbesondere verhindert die erfindungsgemäße Zusammensetzung ein Eindringen von Feuchtigkeit in die nach Verlegung von Fußbodenpaneelen gebildeten V-Fugen.

In einer Ausführungsform beträgt die Menge an Additiv in der vorliegenden Zusammensetzung zwischen 20 und 80 Gew%, bevorzugt zwischen 25 und 50 Gew%.

In einer weiteren Ausführungsform umfasst die in der vorliegenden Zusammensetzung verwendete mindestens eine Fasenfarbe Farbpigmente und eine wässriges Lösungsmittel oder Suspensionsmittel. Als Farbpigmente kommen Russ, Eisenoxide, Titandioxid und/oder organische Pigmente zum Einsatz. Geeignete Lösungsmittel oder Suspensionsmittel sind Melamin-Harz-Formaldehyd-Harze oder Acrylate. In einer Ausführungsform umfasst die Fasenfarbe Farbpigment, Acrylat und Wasser.

Der Rest X¹ ist vorteilhafter ausgewählt aus einer Gruppe enthaltend C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, und der Rest X² ist vorteilhafterwiese ausgewählt ist aus einer Gruppe enthaltend H, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy,

Der organische Rest R¹ ist bevorzugt ausgewählt aus einer Gruppe umfassend C₁-C₃₀-Alkyl, insbesondere C₅-C₂₅-Alkyl, C₂-C₆-Alkenyl, C₃-C₈-Cycloalkyl und C₃-C₈-Cycloalkenyl. In einer Ausführungsform ist der organische R¹ ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Butadienyl oder Cyclohexadienyl, bevorzugt Methyl, Ethyl, Propyl oder Vinyl.

In einer Ausführungsform der vorliegenden Zusammensetzung ist die mindestens eine funktionelle Gruppe Q¹ ausgewählt aus einer Gruppe enthaltend Epoxid-, Methacryl-, Methacryloxy-, Cyano- und/oder Isocyano-Gruppe. Die funktionelle Gruppe Q¹ kann demnach vorteilhafterweise einen Rest mit einer Doppelbindung oder einer Epoxid-Gruppe auf, der mittels UV-Strahlung aktivierbar und polymerisierbar ist.

In einer Variante der vorliegenden Zusammensetzung können Verbindungen der allgemeinen Formel (I) gemäß R¹ₐSiX¹₍₄₋ₐ₎, insbesondere R¹SiX¹₃, mit einer funktionellen Gruppe Q¹ ausgewählt sein aus Methacryloxypropyltrimethoxysilan (MPTS), Aminoethylaminopropyltrimethoxysilan, Silane mit einer Epoxyfunktionalisierung wie Glycidyloxypropyltriethoxysilan, oder Silane mit einer Vinylfunktionalisierung wie z.B. Vinyltrimethoxysilan.

Wie beschrieben, kann der Rest R¹ über mindestens eine funktionelle Gruppe Q¹ verfügen. Darüber hinaus kann der Rest R¹ auch mit weiteren Resten substituiert vorliegen

Der Begriff "substituiert" bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphthyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind.

Der Begriff "Cycloalkyl" umfasst die Gruppen Cyclopropyl, Cyclobutyl, Cyclopentyl, Cyclohexyl und Cycloheptyl.

In einer besonders bevorzugten Variante der vorliegenden Zusammensetzung entspricht die Verbindung der allgemeinen Formel (I) der Formel **SiX¹₄,** wobei der Rest X¹ Alkoxy, insbesondere Methoxy, Ethoxy, n-Propoxy oder i-Propoxy, ist. Als besonders bevorzugte Vernetzer werden Tetramethoxysilan und Tetraethoxysilan verwendet.

In einer weiteren Ausführungsform der vorliegenden Zusammensetzung ist der nichthydrolisierbare organische Rest R² der Verbindung gemäß der Formel (II) ausgewählt aus einer Gruppe umfassend C₁-C₁₅-Alkyl, insbesondere C₁-C₁₀-Alkyl, und C₆-C₁₀-Aryl. Diese können nicht-substituiert oder mit einer weiteren hydrophoben Gruppe substituiert sein

Es ist bevorzugt, wenn der nicht-hydroliserbare organische Rest R² ausgewählt ist aus der Gruppe enthaltend Methyl, Ethyl, n-Propyl, Isopropyl, n-Butyl, s-Butyl, t-Butyl, Pentyl, Hexyl, Heptyl, Octyl, Nonyl, Cyclohexyl, Phenyl und Naphthyl. Besonders bevorzugt sind Methyl, Ethyl, Propyl, Octyl, oder Phenyl-Reste.

Unter dem Begriff "nicht-hydrolysierbarer organischer Rest" ist im Rahmen der vorliegenden Erfindung ein organischer Rest zu verstehen, der in Gegenwart von Wasser nicht zur Bildung einer mit dem Si-Atom verknüpften OH-Gruppe oder NH₂-Gruppe führt.

Die Verbindung der Formel (II) kann insbesondere eine der folgenden Formeln umfassen:
- R²₄Si mit R² als C1-C5 Alkyl-Gruppe, bevorzugt Methyl oder Ethyl wie z.B. Tetramethylsilan;
- R²₃SiX² mit R² als C1-C5 Alkyl-Gruppe, bevorzugt Methyl oder Ethyl und mit X² als H, wie z.B. Trimethylsilan,
- R²SiX²₃ mit R² als C1-C10 Alkyl-Gruppe, bevorzugt Methyl, Ethyl, Propyl, Pentyl, Hexyl, Heptyl, Octyl, oder als C6-C10-Aryl-Gruppe, bevorzugt Phenyl und mit X² als Alkoxy, insbesondere Methoxy, Ethoxy, n-Propoxy oder i-Propoxy, wie z.B. Octyltriethoxysilan, Phenyltriethoxysilan.

In einer Variante der vorliegenden Zusammensetzung werden als Additiv jeweils eine Verbindung der allgemeinen Formel (I) und eine Verbindung der allgemeinen Formel (II) verwendet.

In einer weiteren Variante der vorliegenden Zusammensetzung können aber auch mindestens eine Verbindung der allgemeinen Formel (I) und mindestens zwei, bevorzugt mindestens drei Verbindungen der allgemeinen Formel (II) im Additiv enthalten sein. Jegliche Kombination ist hier vorstellbar.

So kann das in der vorliegenden Zusammensetzung verwendete Additiv folgende Kombinationen aufweisen:
- mindesten ein SiX¹₄, wobei der Rest X¹ Alkoxy, insbesondere Methoxy, Ethoxy, n-Propoxy oder i-Propoxy, ist, und R²₄Si mit R² als C1-C5 Alkyl-Gruppe, bevorzugt Methyl oder Ethyl wie z.B. Tetramethylsilan; oder
- mindestens ein SiX¹₄, wobei der Rest X¹ Alkoxy, insbesondere Methoxy, Ethoxy, n-Propoxy oder i-Propoxy, ist, und R²₃SiX mit R² als C1-C5 Alkyl-Gruppe, bevorzugt Methyl oder Ethyl und mit X als H, wie z.B. Trimethylsilan, oder
- mindestens ein SiX¹₄, wobei der Rest X¹ Alkoxy, insbesondere Methoxy, Ethoxy, n-Propoxy oder i-Propoxy, ist, und R²SiX²₃ mit R² als C1-C10 Alkyl-Gruppe, bevorzugt Methyl, Ethyl, Propyl, Pentyl, Hexyl, Heptyl, Octyl, oder als C6-C10-Aryl-Gruppe, bevorzugt Phenyl und mit X² als Alkoxy, insbesondere Methoxy, Ethoxy, n-Propoxy oder i-Propoxy, wie z.B. Octyltriethoxysilan, Phenyltriethoxysilan; oder
- mindestens ein SiX¹₄, wobei der Rest X¹ Alkoxy, insbesondere Methoxy, Ethoxy, n-Propoxy oder i-Propoxy, ist, und R²₃SiX² mit R² als C1-C5 Alkyl-Gruppe, bevorzugt Methyl oder Ethyl und mit X² als H, wie z.B. Trimethylsilan, und R²SiX²₃ mit R² als C1-C10 Alkyl-Gruppe, bevorzugt Methyl, Ethyl, Propyl, Pentyl, Hexyl, Heptyl, Octyl, oder als C6-C10-ArylGruppe, bevorzugt Phenyl und mit X² als Alkoxy, insbesondere Methoxy, Ethoxy, n-Propoxy oder i-Propoxy, wie z.B. Octyltriethoxysilan, Phenyltriethoxysilan

Des Weiteren kann in einer Variante die Zusammensetzung Tetraethoxysilan als Verbindung der Formel (I) und Trimethylsilan und Phenyltriethoxysilan als Verbindungen der Formel (II) enthalten.

In einer anderen Variante die Zusammensetzung Tetraethoxysilan als Verbindung der Formel (I) und Trimethylsilan, Phenyltriethoxysilan und Octyltriethoxysilan als Verbindungen der Formel (II) enthalten.

In einer weiteren Ausführungsform sind die Verbindung der allgemeinen Formel (I) in einer molaren Menge zwischen 0,08 - 0.2 mol, bevorzugt 0,1 - 0,15 mol, insbesondere bevorzugt 0,1-0,12 mol und die Verbindung der allgemeinen Formel (II) in einer molaren Menge zwischen 0,05 und 0,1 mol, bevorzugt zwischen 0,06 und 0,09 mol, besonders bevorzugt zwischen 0,07 und 0,08 mol in der Zusammensetzung enthalten.

Dabei kann sich der für die Verbindung der allgemeinen Verbindung (II) angegebene Bereich der molaren Menge sich auf eine Verbindung oder auf die Summe von zwei Verbindungen oder drei Verbindungen der allgemeinen Formel (II) beziehen

So können in der Variante der Zusammensetzung aus Tetraethoxysilan als Verbindung der Formel (I) und Trimethylsilan und Phenyltriethoxysilan als Verbindungen der Formel (II) 0,15 mol Tetraethoxysilan und 0,04 mol Trimethylsilan / 0,033 mol Phenyltriethoxysilan enthalten sein.

In der anderen Variante der Zusammensetzung aus Tetraethoxysilan als Verbindung der Formel (I) und Trimethylsilan, Phenyltriethoxysilan und Octyltriethoxysilan als Verbindungen der Formel (II) können 0,1 mol Tetraethoxysilan und 0,03 mol Trimethylsilan, / 0.025 mol Phenyltriethoxysilan und 0,043 mol Octyltriethoxysilan enthalten sein.

Das Verhältnis des Silanverbindung der Formel (I) zu den Silanverbindungen der Formel (II) liegt bevorzugt zwischen 1 : 0,5 und 1 : 2, insbesondere bevorzugt zwischen 1 : 0,75 und 1 : 1,5, ganz besonders bevorzugt zwischen 1 : 1 und 1 : 1,2.

In einer weitergehenden Ausführungsform der vorliegenden Zusammensetzung ist das mindestens eine Polymer ausgewählt aus der Gruppe enthaltend Polyurethane, Epoxidharze; Melaminharze, wie Melamin-Formaldehyd-Harz, und Polyacrylate.

Vorliegend ist die Verwendung eines Polyurethan-Polymer bevorzugt, wobei das Polyurethan-Polymer auf der Basis von aromatischen Polyisocyanaten, insbesondere Polydiphenylmethandiisocyanat (PMDI), Toluylendiisocyanat (TDI) und/oder Diphenylmethandiisocyanat (MDI) vorliegt, wobei PMDI besonders bevorzugt ist.

Das Polymer wird in das aus den Silanverbindungen gebildete Netzwerk eingebaut und verleiht der Zusammensetzung flexible Eigenschaften, die einen Auftrag erleichtern.

Die Art des verwendeten Polymers ist bevorzugt auf die verwendeten Silanverbindungen abgestimmt. So ist es von Vorteil, mit Epoxy-Gruppen modifizierte Silane zusammen mit Epoxid-Polymeren und mit Methacrylat-Gruppen modifizierte Silane zusammen mit AcrylatPolymer zu verwenden.

In einer weiteren Ausführungsform der vorliegenden Zusammensetzung ist es ebenfalls möglich mehr als ein Polymer zu verwenden.

In einer weiteren Ausführungsform beträgt der Gehalt des Polymers in der vorliegend verwendeten Zusammensetzung mindestens 30 Gew%, bevorzugt mindestens 20 Gew%, insbesondere bevorzugt mindestens 10 Gew%. In einer Ausführungsvariante beträgt das Verhältnis von Sol-Gel zu Polymer zwischen 1 : 0,1 und 1 : 0,5, bevorzugt zwischen 1 : 0,2 und 1 : 0,4 (bezogen auf die Feststoffe).

Der Lösemittelgehalt, der im Wesentlichen durch die Verwendung der Silane bedingt ist, liegt zwischen 1 bis 15 Gew%, bevorzugt 2 bis 13 Gew%, insbesondere bevorzugt zwischen 4 bis 10 Gew%. Bei diesen Angaben ist der Lösemittelgehalt aus dem eingesetzten Polymer jedoch zunächst nicht berücksichtigt Lösemittel sind insbesondere Wasser und/oder Alkohole, hier bevorzugt Ethanol. Der Alkoholanteil kann z.B. bei < 1 % liegen. Auch ist es möglich, dass die vorliegende Zusammensetzung ausschließlich Alkohol und wenig oder kein Wasser enthält, d.h. die Silanverbindungen und auch die Polymerdispersion können in einer alkoholischen Form verwendet werden.

In einer weiteren Ausführungsform kann die vorliegende Zusammensetzung anorganische Partikel, insbesondere SiO₂, Al₂O₃, ZrO₂, TiO₂-Partikel, enthalten. Die dabei bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Durch die Zugabe der anorganischen Partikel wird der Feststoffgehalt der Zusammensetzung erhöht, wodurch sich das Auftragsverhalten der Zusammensetzung verbessert. Auch wird durch den Zusatz von anorganischen Partikeln eine Schrumpfung und Rissbildung verhindert. Die anorganischen Partikel können in einem Mengenbereich von 0,1 bis 25 Gew%, bevorzugt 5 bis 20 Gew%, bezogen auf den Feststoffgehalt des Silan-Materials (Sol-Gel-Materials), verwendet werden.

So kann das in der vorliegenden Zusammensetzung verwendete Additiv folgende Kombinationen aufweisen:
- mindesten ein SiX¹₄, wobei der Rest X¹ Alkoxy, insbesondere Methoxy, Ethoxy, n-Propoxy oder i-Propoxy, ist, und R²₄Si mit R² als C1-C5 Alkyl-Gruppe, bevorzugt Methyl oder Ethyl wie z.B. Tetramethylsilan, Polyurethan und optional SiO₂-Partikel; oder
- mindestens ein SiX¹₄, wobei der Rest X¹ Alkoxy, insbesondere Methoxy, Ethoxy, n-Propoxy oder i-Propoxy, ist, und R²₃SiX mit R² als C1-C5 Alkyl-Gruppe, bevorzugt Methyl oder Ethyl und mit X als H, wie z.B. Trimethylsilan, Polyurethan und optional SiO₂-Partikel; oder
- mindestens ein SiX¹₄, wobei der Rest X¹ Alkoxy, insbesondere Methoxy, Ethoxy, n-Propoxy oder i-Propoxy, ist, und R²SiX²₃ mit R² als C1-C10 Alkyl-Gruppe, bevorzugt Methyl, Ethyl, Propyl, Pentyl, Hexyl, Heptyl, Octyl, oder als C6-C10-Aryl-Gruppe, bevorzugt Phenyl und mit X² als Alkoxy, insbesondere Methoxy, Ethoxy, n-Propoxy oder i-Propoxy, wie z.B. Octyltriethoxysilan, Phenyltriethoxysilan Polyurethan und optional SiO₂-Partikel; oder
- mindestens ein SiX¹₄, wobei der Rest X¹ Alkoxy, insbesondere Methoxy, Ethoxy, n-Propoxy oder i-Propoxy, ist, und R²₃SiX² mit R² als C1-C5 Alkyl-Gruppe, bevorzugt Methyl oder Ethyl und mit X² als H, wie z.B. Trimethylsilan, und R²SiX²₃ mit R² als C1-C10 Alkyl-Gruppe, bevorzugt Methyl, Ethyl, Propyl, Pentyl, Hexyl, Heptyl, Octyl, oder als C6-C10-ArylGruppe, bevorzugt Phenyl und mit X² als Alkoxy, insbesondere Methoxy, Ethoxy, n-Propoxy oder i-Propoxy, wie z.B. Octyltriethoxysilan, Phenyltriethoxysilan, Polyurethan und optional SiO₂-Partikel.

Eine besonders bevorzugte Variante der vorliegenden Zusammensetzung umfasst Tetraethoxysilan, Trimethylsilan, Phenyltriethoxysilan, Octyltriethoxysilan und Polyurethann und optional SiO₂-Partikel.Eine ganz besondere bevorzugte Variante der vorliegenden Zusammensetzung umfasst Tetraethoxysilan, Trimethylsilan, Phenyltriethoxysilan, Octyltriethoxysilan, Polyurethan und SiO₂ Partikel.

Die vorliegende Zusammensetzung ist gemäß einer ersten Ausführungsform in einem Verfahren umfassend die folgenden Schritte herstellbar:
- Bereitstellen von mindestens einer Dispersion A) umfassend Polymerdispersion und optional eine Dispersion von anorganischen Partikeln,
- Bereitstellen einer Lösung B) umfassend eine Mischung von mindestens einer Verbindung der allgemeinen Formel (I), mindestens einer Verbindung der allgemeinen Formel (II) und mindestens einem Katalysator, insbesondere einer Säure,
- Zugabe der Lösung B) zu der Dispersion A) und Neutralisation der additiven Mischung (z.B. durch Zugabe einer basischen Verbindung);
- Abtrennen der wässrigen Phase des Additivs aus Polymerdispersion, mindestens einer Verbindung der Formel (I) und mindestens einer Verbindung der Formel (II), und
- Zugabe des Additivs zu der mindestens einen Fasenfarbe.

Die vorliegende Zusammensetzung ist auch gemäß einer zweiten Ausführungsform in einem Verfahren umfassend die folgenden Schritte herstellbar:
- Bereitstellen einer Lösung C) umfassend eine Mischung von mindestens einer Verbindung der allgemeinen Formel (I), mindestens einer Verbindung der allgemeinen Formel (II) und mindestens einer Polymerdispersion (einem Ionenaustauscher);
- Bereitstellen einer Lösung D) umfassend mindestens eine Verbindung der allgemeinen Formel (II) und mindestens einem Katalysator, insbesondere eine Säure,
- Einrühren der Lösung D) in Lösung C);
- Abtrennen der wässrigen Phase des Additivs aus mindestens einer Verbindung der Formel (I), mindestens zwei Verbindungen der Formel (II) und Polymerdispersion; und
- Zugabe des Additivs zu der mindestens einen Fasenfarbe.

Als Katalysator geeignete anorganische und/oder organische Säuren sind ausgewählt aus einer Gruppe enthaltend Phosphorsäure, Essigsäure, *p*-Toluolsulfonsäure, Salzsäure, Ameisensäure oder Schwefelsäure. Ebenfalls geeignet sind Ammoniumsalze wie Ammoniumsulfat, die als schwache Säuren reagieren. *p*-Toluolsulfonsäure ist besonders bevorzugt.

Zur anschließenden Neutralisierung des Reaktionsgemisches wird bevorzugt eine basische Verbindung, wie z.B. Ammoniak oder NaOH zugegeben. Dies führt zu einer Separation der wässrigen Phase mit dem Binderanteil von der alkoholischen Phase (ethanolischen Phase). Die wässrige Phase kann anschließend leicht von der alkoholischen Phase abgetrennt werden.

In dem Fall, dass anorganische Partikel der Bindemittelzusammensetzung zugemischt werden, werden die anorganischen Partikel bevorzugt in einer Menge zwischen 0,1 bis 15 Gew%, bevorzugt 0,5 bis 10 Gew%, insbesondere bevorzugt zwischen 1 bis 5 Gew% in verwendet.

Wie bereits oben erwähnt, kann die vorliegende Zusammensetzung zur Beschichtung bzw. Versiegelung von Kante und/oder Fasen von Holzwerkstoffplatten, insbesondere WPC, Spanplatte, HDF oder MDF-Platten, verwendet werden.

Die Aufgabe der vorliegenden Erfindung wird ebenfalls durch eine Holzwerkstoffplatte mit der vorliegenden Zusammensetzung gelöst.

Entsprechend umfasst mindestens eine Holzwerkstoffplatte, wie z.B. HDF- oder MDF-Platte oder Spanplatte, mindestens eine erfindungsgemäße Zusammensetzung, mit der insbesondere die Kanten und/oder Fasen der Holzwerkstoffplatte zum Zwecke der Versiegelung beschichtet sind.

Die Zusammensetzung kann auf die Kanten und/oder Fasen der Holzwerkstoffplatte z.B. mittels Sprühen, Walzen oder unter Verwendung eines Vakuumaten aufgetragen werden.

Die Schichtdicke der Zusammensetzung auf der Plattenkante und/oder -fase kann in einem Bereich zwischen 10 und 50 µm, bevorzugt zwischen 20 und 40 µm liegen.

Die Zusammensetzung kann im Flüssigauftrag mit einer Menge zwischen 100 und 200 Silan fl. g/m², bevorzugt zwischen 120 und 150 Silan fl. g/m² auf die Plattenkanten und/oder Fasen aufgebracht werden. Dies ergibt einen Feststoffanteil auf der Plattenkante zwischen 5 und 25 mg/cm², bevorzugt zwischen 10 und 20 mg/cm².

Holzwerkstoffplatten, wie Holzspan- und Holzfaserplatten wie z.B. MDF-, HDF-Platten, werden aus Holzspänen oder Holzfasern hergestellt, die durch Zerspanung der Holzhackschnitzel in einem Zerspaner oder ein Zerfaserungsprozess der Holzhackschnitzel in einem Refiner gewonnen werden. Die mit in Holzfaserplatten verwendeten Holzfasern weisen eine Länge zwischen 1,5 mm und 20 mm und eine Dicke zwischen 0,05 mm und 1 mm auf. Die Größe von in Holzspanplatten verwendeten Holzspänen ist abhängig davon, ob sie in der Deck- oder Mittelschicht eingesetzt werden. In der Mittelschicht beginnen die Späne bei > 0,125 mm Siebweite, in der Deckschicht bei > 0,8 - 1,0 mm.

Die vorliegenden Holzwerkstoffplatten können verschiedene Bindemittelsysteme aufweisen, die als Bindemittel mit den Holzfasern vermischt und verpresst werden. Bevorzugte Bindemittelsysteme sind: Formaldehyd-Harze, wie Harnstoff-Formaldehyd-Harze, Melamin-Formaldehyd-Harze, Melamin-Harnstoff-Formaldehyd-Harze; Polyurethane, bevorzugt auf der Basis von Polydiphenylmethandiisocyanat (PMDI), Epoxidharz oder Polyesterharze.

Die vorliegenden Holzwerkstoffplatten können auch eine Beschichtung auf der Plattenoberseite mit Folien, z.B. Folien aus thermoplastischen Materialien wie PVC oder PP, oder Papierimprägnate, wie z.B. Imprägnate aus Dekorpapierlagen oder Overlaypapieren aufweisen. Overlay-, Dekor-, Gegenzug- und Kraftpapierimprägnate basieren auf dünnen Papierlagen, die mit einem Harz, bevorzugt Melamin-Formaldehyd-Harz vollständig oder teilweise durchtränkt (imprägniert) sind.

Imprägnierungen können z.B. in einem Imprägnierbad, durch Walzen, durch Rasterwalzen, durch Aufrakeln oder auch durch Besprühen aufgebracht werden. In einer Ausführungsvariante werden die Papierlagen wie folgt behandelt: Zunächst wird die Papierlage rückseitig (z.B.in einer Tränkwanne) mit einem Harz mit einem Feststoffgehalt zwischen 50 und 70 Gew%, bevorzugt 60 Gew% imprägniert. Nach dem Durchlauf einer Atemstrecke erfolgt eine Tauchimpägnierung mit einem Harz. In einem Rakelsystem / Quetschwalzenpaar wird überschüssiges Harz entfernt, und optional werden (im Falle einer Overlaypapierlage) abriebfeste Partikel auf die imprägnierte Papierlage gestreut. Es erfolgt ein Trocknungsschritt auf eine Restfeuchte von ca. 6%.

Im Falle von beschichteten Holzwerkstoffplatten werden diese Papiere- (Dekor-, Overlay-) auf die Holzwerkstoffplatten aufgelegt und verpresst. Typischerweise wird zunächst das imprägnierte Dekorpapier auf die Oberseite der Holzwerkstoffplatte aufgebracht. Auf das Dekorimprägnat folgt anschließend mindestens ein Overlayimprägnat. Das Gegenzugimprägnat wird unterseitig mit der Holzwerkstoffplatte verpresst. Ein typischer Aufbau einer beschichteten HDF-Platte ist von oben nach unten: Overlayimprägnat, Dekorimprägnat, HDF Träger, Gegenzugimprägnat.

In einer Ausführungsform ist es ebenfalls vorgesehen, ein Furnier auf einer Holzwerkstoffplatte aufzubringen. Derartige Furniere weisen typischerweise eine Oberflächenvergütung aus einer Lackierung auf Basis von UV- oder ESH-Lacken auf.

Die Furniere werden auf der Holzwerkstoffplatte (HDF, Spanplatte, OSB usw.) aufgeleimt. Zur Verklebung der Furniere auf dem Träger werden meist Harnstoff- oder PVAc-Leime mit Härter eingesetzt.

Es ist auch möglich, das Furnier in einer Kurztaktpresse mit Hilfe eines mit Melaminharz imprägnierten Papiers (z. B. ein Overlay) auf die Holzwerkstoffplatte aufzupressen. Die Pressparameter liegen dabei bei ca. T > 150°C, p > 30 bar und t > 30 sec. Mit dieser Technologie lassen sich ebenfalls Furnierfussböden mit Furnieren herstellen, die eine Stärke von ca. 0,5 mm besitzen. Von entscheidender Bedeutung ist dabei, dass auch hier beim Presssvorgang das Melaminharz möglichst weit in das Furnier aufsteigt. Dadurch erfolgt zum einen eine Armierung des Furniers mit dem Kunstharz und zum anderen wird das durch die Verpressung komprimierte Furnier in dem Zustand fixiert. Allerdings sollte das Melaminharz nicht aus dem Furnier austreten, da dies zu Verfärbungen in der Oberfläche und zu Haftungsproblemen beim anschließenden Lackieren oder Ölen führt.

In einer bevorzugten Ausführungsform wird eine mit einem Furnier verpresste Spanplatte verwendet. Hierzu wird in einem ersten Schritt ein harzgetränktes Papier (bevorzugt ein harzimprägniertes Kraftpapier) mit einem Furnier auf eine Spanplatte (z.B. auf die Oberseite) aufgelegt und verpresst. In einer weitergehenden Variante werden als Gegenzug ein harzgetränktes Papier und/oder ein Furnier verwendet.

Es ist auch möglich, dass die Holzwerkstoffplatte mit flüssigen Harzschichten beschichtet (Flüssigbeschichtung) und verpresst wird. Dabei wird auf der Holzwerkstoffplatte zunächst eine Grundierungsschicht gefolgt von einer Primerschicht angeordnet, die dann unter Ausbildung einer Dekorschicht bedruckt wird. Auf die Dekorschicht werden anschließend weitere Harzschichten als Schutz- und Verschleißschichten aufgebracht. Die Holzwerkstoffplatte kann entsprechend mindestens eine Dekorschicht auf der Oberseite und einen mehrschichtigen Harzaufbau enthaltend abriebfeste Partikel, Zellulosefasern und Glaskugeln aufweisen. Folgender Schichtaufbau ist möglich (von unten nach oben gesehen): Gegenzug aus sechs Harzschichten - Holzwerkstoffplatte - Grundierungsschicht - Druckdekorschicht - Schutzschicht, insbesondere eine Schutzschicht aus einem noch nicht vollständig ausgehärtetem Harz - erste Harzschicht mit Zellulosefasern - Schicht aus abriebfesten Partikeln - zweite Harzschicht - dritte Harzschicht mit Glaskugeln- vierte Harzschicht mit Glaskugeln - fünfte Harzschicht mit Glaskugeln - sechste Harzschicht (ohne Glaskugeln). Die Schutzschicht dient der Abdeckung des Dekors und des Schutzes des Dekors während der Zwischenlagerung (Stapelung, Lagerung, Transport). Die weiteren Harzschichten auf der Oberseite bilden in Summe ein Overlay, das das fertige Laminat gegen Abrieb schützt und eine dekorsynchrone Strukturierung ermöglicht.

Im Falle von der Verwendung der beschriebenen Holzwerkstoffplatten als Fußbodenpaneele werden die Holzwerkstoffplatten mit einer Feder-Nut-Verriegelung versehen und zum schwimmenden Verlegen verwendet. Ein entsprechendes Verlegeverfahren umfasst dabei das Verlegen eines ersten Fußbodenpaneels, und Anfügen eines zweiten Fußbodenpaneels an das erste Fußbodenpaneel, wobei die Feder des zweiten Fußbodenpaneels in die Nut des ersten Fußbodenpaneels eingefügt wird.

Die mit Fasen versehenen Fußbodenpaneele bilden nach dem Verlegen V-Fugen, die durch die aufgetragene Zusammensetzung aus Fasenfarbe und Additiv versiegelt und vor dem Eindringen von Feuchtigkeit geschützt sind.

Die Erfindung wird nachfolgend unter Bezugnahme an Ausführungsbeispielen näher erläutert.

### Ausführungsbeispiel 1: Herstellung einer Versiegelungszusammensetzung gemäß einer ersten Verfahrensvariante

### Herstellung Dispersion A)

Es werden 28,8 g einer wässrigen SiO₂ Dispersion (Köstrosol 3550) und 20 g einer wässrigen Polyurethanlösung Alberdingk U 3215 vorgelegt.

### Herstellung Lösung B)

Parallel werden 12,3g Ocytltriethoxysilan, 2,4g Trimethylsilan, 6,1g Phenyltriethoxysilan, 20,8g Tetraethoxysilan und 28,8 g Wasser auf 50 °C erhitzt und gerührt, unter Rühren wird nun 2,8 g Schwefelsäure und für 120 Minuten gerührt. Anschließend wir diese Lösung im warmen Zustand in obiger Suspension eingerührt und bei Raumtemperatur weitere 60 Minuten gerührt. Es erfolgt eine Zugabe ein 0,1 molaren NaOH Lösung bis ein pH Wert von 7,5 erreicht wird. Nach 24 Stunden Standzeit wird die alkoholische Phase über einen Scheidetrichter abgetrennt.

Das Additiv kann nun bis zu 50 Gew. % zu einer handelsüblichen Fasenfarbe hinzugegeben werden, welches über mehrere Wochen stabil bleibt. Die Aushärtung nach Auftrag erfolgt thermisch (Bsp. 100 °C, 5 Minuten).

### Ausführungsbeispiel 2: Herstellung einer Versiegelungszusammensetzung gemäß einer zweiten Verfahrensvariante

### Herstellung Lösung C)

Vorlage von 6,1 g Phenyltriethoxysilan und 20,8 g Tetraethoxysilan und Zugabe von 7,2 g deminieralisiertem Wasser und 0,8 g lonentauscher Lewatit 2629 wird das Gemisch 3 Stunden bei 60 °C gerührt. Anschließend wird der lonentauscher über Fitration wieder entfernt und in einem weiteren Schritt 12 g Wasser und 17 g einer wässrigen Polyurethanlösung Alberdingk U 3215 zugegeben.

### Herstellung Lösung D)

Parallel werden 12,3g Ocytltriethoxysilan, 2,4g Trimethylsilan vorgelegt und 2,4 g Schwefelsäure (1 molar) mit 20 g Wasser zugegeben und bei 55 °C für 4 Stunden hydrolysiert. Nach Abkühlen auf Raumtemperatur wird die Lösung B in Lösung A eingerührt und über 8 Stunden ohne Rühren gelagert. Es bilden sich zwei Phasen aus, die nun über einen Scheidetrichter getrennt werden.

Das Additiv wird kann nun bis zu 50 Gew. % zu einer handelsüblichen Fasenfarbe hinzugegeben werden, welches über mehrere Wochen stabil bleibt. Die Aushärtung nach Auftrag erfolgt thermisch (Bsp. 100 °C, 5 Minuten).

### Ausführungsbeispiel 3: Vergleich der Zusammensetzung gemäß Ausführungsbeispiel 1 und einer Zusammensetzung gemäß EP 3 597 706 B1

### Zusammensetzung gemäß EP 3 597 706 B1

Der verwendete Fasenlack hat eine Auslaufzeit (4mm Düse) von 36 Sekunden bei 21 °C (gemessen gemäß EN ISO 2431:2011 "Beschichtungsstoffe-Bestimmung der Auslaufzeit mit Auslaufbechern"). Additiv "A" gemäß Ausführungsbeispiel aus EP 3 597 706 B1 hat eine Auslaufzeit von 11 Sekunden.

Die Zugabe von 25 Gew. % von "A" zu Fasenlack ergab eine Auslaufzeit der Mischung von 60 Sekunden. Nach 60 Minuten Wartezeit steigt diese auf 140 bis 150 Sekunden an. Nach weiteren 60 Minuten Wartezeit ist keine Messung mehr möglich, da das Gemisch geliert ist.

Zugabe von 50 Gew. % von "A" zu Fasenlack ergab eine Auslaufzeit der Mischung von 120 Sekunden. Nach 60 Minuten Wartezeit war das Gemisch geliert.

### Zusammensetzung gemäß Ausführungsbeispiel 1

Der verwendete Fasenlack hat weiterhin eine Auslaufzeit (4mm Düse) von 36 Sekunden bei 21 °C. Additiv "B" gemäß Ausführungsbeispiel 1 hat eine Auslaufzeit von 13 Sekunden

Die Zugabe von 25 Gew. % von "B" zu Fasenlack ergab eine Auslaufzeit der Mischung von 40 Sekunden. Nach 60 Minuten Wartezeit bleibt die Auslaufzeit bei 40 Sekunden. Nach weiteren 60 Minuten Wartezeit ebenfalls keine Erhöhung. Auch nicht nach 72 Stunden

Die Zugabe von 50 Gew. % von "B" zu Fasenlack ergab eine Auslaufzeit der Mischung von 40 Sekunden. Nach 60 Minuten Wartezeit bleibt die Auslaufzeit bei 40 Sekunden. Nach weiteren 60 Minuten Wartezeit ebenfalls keine Erhöhung. Auch nicht nach 72 Stunden.

### Ausführungsbeispiel 4:

Eine 7,4 mm HDF mit einer Rohdichte von ca. 850 kg/m³, die mit einem Harnstoff-Formaldehyd-Leim in einer üblichen Menge hergestellt worden war, wurde auf der Oberseite mit einem Overlay- (AC4) und einem Dekorimprägnat und auf der Unterseite mit einem Gegegenzugimprägnat in einer KT-Presse unter Druck und Temperatur beschichtet ( p=40 bar, T=200°C, t=15 sec ). Die Platten werden zum Abkühlen in ein Reifelager überführt und nach drei Tagen auf einer Fussbodenstrasse zu Rohdielen aufgetrennt. Sie wurden dann mit einem leimlosen Profil (siehe Bild) versehen, das beim NALFA-Test in ca. 80 % der Prüfungen ein negatives Ergebnis lieferte. Es handelte sich dabei um ein leimloses Profil ohne zusätzliche Kunststoffverriegelungs-mittel. Dabei wurden sie in der Fase mit einem Gemisch aus Fasenfarbe und Silan-Additiv gemäß Ausführungsbeispiel 1 (Auftragsmenge: 1,0 g fl./lfm, Feststoffgehalt: ca. 42%) versehen. Mit einem IR-Strahler wurde das auf die Fase aufgetragene Gemisch getrocknet. Zum Vergleich wurden Dielen nur mit Fasenfarbe produziert.

### Ausführungsbeispiel 5:

Eine 7,4 mm HDF mit einer Rohdichte von ca. 850 kg/m³, die mit einem Harnstoff-Formaldehyd-Leim in einer üblichen Menge hergestellt worden war, wurde in einer Produktionslinie auf der Oberseite mitfolgenden Materialaufträgen versehen, wobei sich nach jedem Auftrag eine Zwischentrocknung anschloss :
- Melaminprimer (20 g Melaminharz fl. / m² ( Feststoffgehalt: 55 Gew%) mit Trocknung
- Farbgrundierung weiss ( Mehrfachauftrag gesamt: 25 g Weissgrundierung fl. / m² ( Feststoffgehalt: ca. 50 Gew%) mit Zwischentrocknung
- Primer (10 - 20 g fl. / m² ) mit Trocknung
- Druck ( Indirekter Tiefdruck oder Digitaldruck)
- Melaminabdeckung ( ca. 20 - 30 g Melaminharz fl. / m², Feststoffgehalt: ca. 65 Gew% mit ca. 10 - 20% Glaskugeln bezogen auf Flüssigharz )

Dann wurden die vorbeschichteten HDF in einer weiteren Produktionslinie mit folgenden Materialaufträgen versehen:
- Melaminharzauftrag oben ( ca. 60 - 80 g Melaminharz fl. / m², Feststoffgehalt: 55 Gew% )
- Streuauftrag Korund ( 20 -30 g Korund / m², F220 gemäss FEPA-Standard )
- Mehrfacher Melaminharzauftrag oben mit Trocknung ( 5 Aufträge: Gesamtauftrag: 60
   - 80 g Melaminharz fl. / m², Feststoffgehalt: ca. 55 Gew%,
   3. Auftrag mit 10 - 20 Gew% Glaskugeln )
- Mehrfacher Melaminharzauftrag unten mit Zwischentrocknung ( 3 Aufträge: Gesamtauftrag: 140 -160 g Melaminharz fl. / m²m Feststoffgehalt;
   ca. 55 Gew% )

In den Rezepturen sind die benötigten Hilfsstoffe wie Härter, Netzmittel Trennmittel enthalten. Dieser Aufbau wird dann in einer KT-Presse unter Druck und Temperatur beschichtet (p=40 bar, T=200°C, t=15 sec). Die Platten werden zum Abkühlen in ein Reifelager überführt und nach drei Tagen auf einer Fussbodenstrasse zu Rohdielen aufgetrennt. Sie wurden dann mit einem leimlosen Profil (siehe Bild) versehen, das beim NALFA-Test in ca. 80 % der Prüfungen ein negatives Ergebnis lieferte. Es handelte sich dabei um ein leimloses Profil ohne zusätzliche Kunststoffverriegelungsmittel. Dabei wurden sie in der Fase mit einem Gemisch aus Fasenfarbe und gemäß Ausführungsbeispiel 1 (Auftragsmenge: 1,0 g fl./lfm, Feststoffgehalt: ca. 42%) versehen. Mit einem IR-Strahler wurde das auf die Fase aufgetragene Gemisch getrocknet. Zum Vergleich wurden Dielen nur mit Fasenfarbe produziert

### Ausführungsbeispiel 6: NALFA-Test (ISO 4760)

Aus den im Ausführungsbeispiel 4 und 5 hergestellten Dielen wurden Prüfflächen ( je 10 pro Variante ) gemäss der ISO 4760 hergestellt. In den auf die Oberfläche aufgeklebten Ring wurden 100 ml eingefärbtes Wasser eingefüllt. Das Wasser verbleibt 24 h auf der Oberfläche. Danach wird entsprechend der Norm eine Beurteilung vorgenommen. Diese beinhaltet nicht nur die Bestimmung der noch im Ring vorhandenen Restmenge an Wasser sondern auch eine Bestimmung der Quellung der Prüfkörper im Prüfbereich. Die Ergebnisse sind in der folgenden Tabelle zusammengefasst.

| AusführungsbeiSpiel | Probenbezeichnung | Stärke in mm | Ergebnis NALFA-Test |
|---|---|---|---|
| | Nullprobe Fasenfarbe | 7,4 | 8 von 10 Proben durchgefallen |
| 4 | Direktbeschichtung mit Fasenfarbe/Silan | 7,4 | 10 von 10 Proben bestanden |
| 5 | Direkdruck/Direktbeschichtung mit Fasenfarbe/Silan | 7,4 | 10 von 10 Proben bestanden |

Das gleiche Verfahren wurde bei anderen leimlosen Profilen (mit und ohne Kunststoffverriegelungsmitteln), die beim NALFA-Test negativ abschnitten angewendet. Dabei ergab sich immer eine deutliche Verbesserung beim NALFA-Test. Die Quote der bestandenen Tests lag bei allen Varianten bei grösser 90%.

### Ausführungsbeispiel 7: Wasserfeste Spanplatte mit Furnieroberfläche und Versiegelung

Die Ausgangsmaterialien werden nachfolgend erläutert. Als Alternative zum Gegenzug aus Papier (Alternative I) kann auch ein Gegenzug aus Furnier (Alternative II) eingesetzt werden. Das Furnier für den Gegenzug kann von gleicher oder abweichender, insbesondere einfacherer Qualität sein wie das Furnier für die Oberseite.

### Furnier für die Oberseite:

| | | |
|---|---|---|
| | Stärke: | 0,6 mm |
| | Art: | Eiche |
| Papier: | Kunstharzgetränktes Kraftpapier | |
| | Papiergewicht: | 25 g/m² |
| | Harzauftrag: | 600% |
| | Kunstharz: | Melaminharz |
| | | |
| wasserfeste Spanplatte: | | Dicke 7,8 mm |
| | | |
| Gegenzug: | | |
| I Papier: | Kunstharzgetränktes Kraftpapier | |
| | Papiergewicht: | 25 g/m² |
| | Harzauftrag: | 600% |
| | Kunstharz: | Melaminharz |
| II Furnier | Stärke | 0,6 mm |
| | Art: | Pappel |

### Herstellung des kunstharzgetränkten Papiers:

Das Papier wird durch ein Bad mit flüssigem Kunstharz, hier Melaminharz, geführt. In dem Bad wird das Papier mit flüssigem Kunstharz imprägniert bzw. getränkt. Nach dem Imprägnieren bzw. Tränken wird überschüssiges Kunstharz durch einen Abstreifer entfernt, so dass sich allein auf der Oberseite des nun kunstharzgetränkten Papiers eine Schicht von Kunstharz befindet. Die Oberseite des kunstharzgetränkten Papiers besteht aus Kunstharz, hier: Melaminharz. Die Menge des eingesetzten Kunstharzes kann variiert werden. Sie ist aber bevorzugt so bemessen, dass das aufgebrachte Furnier beim nachfolgenden Verpressen durch das in der Presse verflüssigte Kunstharz das aufgebrachte Furnier zu mindestens 2/3 der Furnierdicke durchdringt. Weiter bevorzugt wird das Furnier in der Presse komprimiert. Nach einer besonders bevorzugten Ausführung ist damit nach Abschluss des Pressvorgangs das Furnier zu mindestens 2/3, vorteilhaft vollständig mit Kunstharz imprägniert. Ein Quellen und Schwinden des Furniers ist damit weitgehend reduziert.

Das so getränkte Papier wird getrocknet bis auf eine Restfeuchte von z. B. 5% bis 6%. Der Harzauftrag des 25 g/m² schweren Papiers lag bei 600% bezogen auf das Gewicht des Papiers. Die Trocknung erfolgt z. B. in einem Kanaltrockner, in dem Heißluftdüsen das Papier von der Oberseite und der Unterseite anströmen und dadurch trocknen, wobei das Kunstharz aber nicht ausgehärtet wird. Das getrocknete, kunstharzgetränkte Papier kann nun gelagert werden, bis es verwendet wird.

Das kunstharzgetränkte Papier für den Gegenzug kann auf die gleiche Art hergestellt werden wie vorstehend beschrieben. Auch das kunstharzgetränkte Papier für den Gegenzug wird bis auf einen VC-Wert von z. B. 6% getrocknet. Das Furnier für den Gegenzug kann genauso vorbereitet und anschließend auch verarbeitet werden wie das Furnier für die Oberseite.

### Herstellen der furnierten Platte:

Gegenzug, Trägerplatte, kunstharzgetränktes Papier und Furnier werden zu einem Pressgutstapel geschichtet, wobei die kunstharzgetränkten Papiere mit der Oberseite, die Kunstharz aufweist, zur Oberseite der wasserfesten Spanplatte und mit ihrer Unterseite zum Furnier gerichtet sind. Der Pressgutstapel wird in eine KT-Presse (Kurztaktpresse) verbracht und dort bei einer Temperatur von 180°C, einem Druck von p = 30 N/mm² während einer Presszeit von 60 Sekunden verpresst.

Es kann mit einem einfachen, glatten Pressblech gepresst werden. Bei diesem Ausführungsbeispiel können alternativ aber auch strukturierte Pressbleche als Strukturgeber eingesetzt werden. Es kann beispielsweise ein Pressblech mit einer Holzstruktur verwendet werden. Im Furnier ist dann die Holzstruktur des Pressblechs erkennbar, die von der Holzstruktur des Furniers abweichen kann. Auf der Oberseite des Furniers hatte sich keine erkennbare Melaminharzschicht ausgebildet. Die beschichtete wasserfeste Spanplatte wurde danach optional mit einem UV-Lack mit einer Auftragsmenge von 50 g/m² bis 100 g/m² oder mit einem UV-Öl mit einer Auftragsmenge von 20 g/m² bis 40 g/m² in der Oberfläche veredelt. Die Auftragsmengen orientierten sich dabei an die gewünschte Nutzungsklasse. In den UV-Lack kann optional Korund eingebracht sein, insbesondere dann, wenn höhere Nutzungsklassen mit verbesserter Abriebfestigkeit erreicht werden sollen.

Die Furnieroberfläche auf der Oberseite ist damit auf eine Weise akzentuiert bzw. gestaltet, die bisher nicht möglich war. Die Rückseite der wasserfesten Spanplatte kann so belassen werden, insbesondere, wenn gemäß Alternative II ein Furnier aufgebracht wurde, oder es kann alternativ z. B. nachträglich eine Trittschalldämmung aufkaschiert werden.

Das Grossformat wird dann auf einer Fussbodenlinie zunächst zu Rohfixmassen aufgetrennt und dann zu profilierten Dielen gefräst. Diese Dielen können mit oder ohne Fase ausgestattet sein.

Die Fase oder die gerade Furnierkante wird mit einem Gemisch aus Fasenfarbe und Silan-Additiv gemäß Ausführungsbeispiel 1 (Auftragsmenge: 1,0 g fl./lfm, Feststoffgehalt: ca. 42%) versehen. Der Auftrag wird mit Hilfe eines IR-Strahlers getrocknet.

## Patentansprüche

1. Zusammensetzung zur Versiegelung und Beschichtung von Kanten und/oder Fasen von Holzwerkstoffplatten umfassend
c) Mindestens eine Fasenfarbe, und
d) Mindestens ein Additiv aus
- mindestens einer Verbindung der allgemeinen Formel (I)
**R¹ₐSiX¹₍₄₋ₐ₎** **(I),**
wobei
- X¹ Alkoxy-, Aryloxy-, Acyloxy- ist, und
- R¹ ein organischer Rest ist ausgewählt aus der Gruppe umfassend Alkyl, Aryl, Cycloalkyl, die durch -O- oder -NH- unterbrochen sein können, und
- wobei R¹ mindestens eine funktionelle Gruppe Q₁ aufweist, die ausgewählt ist aus einer Gruppe enthaltend eine Acryl-, Acryloxy-, Methacryl-, Methacryloxy-, Cyano-, Isocyano- und Epoxid- Gruppe, und
- a = 0, 1, 2, 3, insbesondere 0 oder 1 ist,
- mindestens einer Verbindung der allgemeinen Formel (II)
**R²_{b}SiX²_{(4-b)}** **(II),**
wobei
- X² H oder Alkoxy-, Aryloxy-, Acyloxy ist,
- R² ein nicht-hydrolysierbarer organischer Rest R² ist ausgewählt aus der Gruppe umfassend Alkyl und Aryl, und
- b = 1, 2, 3, oder 4 ist, und
- mindestens einer wässrigen Polymerdispersion,
**gekennzeichnet durch**
eine Viskosität (gemessen gemäß EN ISO 2431:2011, 21°C) mit einer Auslaufzeit zwischen 20 und 100 sec, bevorzugt zwischen 30 und 80 sec, insbesondere bevorzugt zwischen 35 und 60 sec über einen Zeitraum von mindestens 30 Minuten, bevorzugt von mindestens 60 Minuten, insbesondere bevorzugt von mindestens 120 Minuten.

2. Zusammensetzung nach Anspruch 1, **dadurch gekennzeichnet, dass** das Additiv in einer Menge zwischen 20 und 80 Gew%, bevorzugt zwischen 25 und 50 Gew% enthalten ist.

3. Zusammensetzung nach einem der vorhergehenden Ansprüche, **dadurch gekennzeichnet, dass** die mindestens eine Fasenfarbe Farbpigmente und eine wässrige Melamin-Harz-Formaldehyd Suspension umfasst.

4. Zusammensetzung nach einem der vorhergehenden Ansprüche, **dadurch gekennzeichnet, dass** mindestens eine Verbindung der allgemeinen Formel (I) und mindestens zwei, bevorzugt mindestens drei Verbindungen der allgemeinen Formel (II) enthalten sind.

5. Zusammensetzung nach einem der vorhergehenden Ansprüche, **dadurch gekennzeichnet, dass** X¹ ausgewählt ist aus einer Gruppe enthaltend C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, und X² ausgewählt ist aus einer Gruppe enthaltend H, C₁₋₆-Alkoxy,insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy,

6. Zusammensetzung nach einem der vorhergehenden Ansprüche, **dadurch gekennzeichnet, dass** die Verbindung der allgemeinen Formel (I) der Formel **SiX¹₄,** insbesondere mit X¹ Alkoxy, insbesondere Methoxy, Ethoxy, n-Propoxy oder i-Propoxy, entspricht.

7. Zusammensetzung nach einem der vorhergehenden Ansprüche, **dadurch gekennzeichnet, dass** der nicht-hydroliserbare organische R² ausgewählt ist aus einer Gruppe umfassend C₁-C₁₅-Alkyl, insbesondere C₁-C₁₀-Alkyl, und C₆-C₁₀-Aryl.

8. Zusammensetzung nach einem der vorhergehenden Ansprüche, **dadurch gekennzeichnet, dass** nicht-hydroliserbare organische R² ausgewählt ist aus der Gruppe enthaltend Methyl, Ethyl, n-Propyl, Isopropyl, n-Butyl, s-Butyl, t-Butyl, Pentyl, Hexyl, Heptyl, Octyl, Nonyl, Cyclohexyl, Vinyl, 1-Propenyl, 2-Propenyl, Butenyl, Acetylenyl, Propargyl, Phenyl und Naphthyl.

9. Zusammensetzung nach einem der vorhergehenden Ansprüche, **dadurch gekennzeichnet, dass** die Verbindung der Formel (II) eine der folgenden Formeln umfasst:
- R²₄Si mit R² als C1-C5 Alkyl-Gruppe, bevorzugt Methyl oder Ethyl;
- R²₃SiX² mit R² als C1-C5 Alkyl-Gruppe, bevorzugt Methyl oder Ethyl und mit X² als H,
- R²SiX²₃ mit R² als C1-C10 Alkyl-Gruppe, bevorzugt Methyl, Ethyl, Propyl, Pentyl, Hexyl, Heptyl, Octyl, oder als C6-C10-Aryl-Gruppe, bevorzugt Phenyl und mit X² als Alkoxy, insbesondere Methoxy, Ethoxy, n-Propoxy oder i-Propoxy.

10. Zusammensetzung nach einem der vorhergehenden Ansprüche, **dadurch gekennzeichnet, dass** das mindestens eine Polymer der Polymerdispersion ausgewählt ist aus der Gruppe enthaltend Polyurethane, insbesondere Polydiphenylmethandiisocyanat (PMDI), Epoxidharze, Melaminharze, Polyacrylate.

11. Zusammensetzung nach einem der vorhergehenden Ansprüche, **dadurch gekennzeichnet, dass** anorganische Partikel, insbesondere SiO₂, Al₂O₃, ZrO₂, TiO₂-Partikel, enthalten sein können.

12. Zusammensetzung nach einem der vorhergehenden Ansprüche herstellbar in einem Verfahren umfassend die folgenden Schritte:
- Bereitstellen von mindestens einer Dispersion A) umfassend Polymerdispersion und optional eine Dispersion von anorganischen Partikeln,
- Bereitstellen einer Lösung B) umfassend eine Mischung von mindestens einer Verbindung der allgemeinen Formel (I), mindestens einer Verbindung der allgemeinen Formel (II) und mindestens einem Katalysator, insbesondere einer Säure,
- Zugabe der Lösung B) zu der Dispersion A) und Neutralisation der additiven Mischung (Zugabe einer basischen Verbindung);
- Abtrennen der wässrigen Phase des Additivs aus Polymerdispersion, mindestens einer Verbindung der Formel (I) und mindestens einer Verbindung der Formel (II), und
- Zugabe des Additivs zu der mindestens einen Fasenfarbe.

13. Zusammensetzung nach einem der Ansprüche 1-12 herstellbar in einem Verfahren umfassend die folgenden Schritte:
- Bereitstellen einer Lösung C) umfassend eine Mischung von mindestens einer Verbindung der allgemeinen Formel (I), mindestens einer Verbindung der allgemeinen Formel (II) und mindestens einer Polymerdispersion (einem Ionenaustauscher);
- Bereitstellen einer Lösung D) umfassend mindestens eine Verbindung der allgemeinen Formel (II) und mindestens einem Katalysator, insbesondere eine Säure,
- Einrühren der Lösung D) in Lösung C);
- Abtrennen der wässrigen Phase des Additivs aus mindestens einer Verbindung der Formel (I), mindestens zwei Verbindungen der Formel (II) und Polymerdispersion; und
- Zugabe des Additivs zu der mindestens einen Fasenfarbe.

14. Verwendung einer Zusammensetzung nach einem der vorhergehenden Ansprüche zur Beschichtung / Versiegelung von Kanten und/oder Fasen von Holzwerkstoffplatten, insbesondere Spanplatten, HDF- oder MDF-Platten.

15. Holzwerkstoffplatte umfassend mindestens eine auf eine Kante und/oder Fase aufgebrachte Zusammensetzung nach einem der Ansprüche 1 bis 13.
